# EUROPÄISCHE PATENTSCHRIFT

(11) **EP 3 552 813 B1**
(45) Veröffentlichungstag und Bekanntmachung des Hinweises auf die Patenterteilung: **01.07.2020**
(21) Anmeldenummer: 19160554.2
(22) Anmeldetag: 04.03.2019
(51) Int. Cl.: B32B 3/02, B32B 3/26, B32B 5/02, B32B 5/14, B32B 5/26, B32B 7/02, B29C 70/20, B64C 1/06, B64C 3/18

(54) **FASERVERBUNDBAUTEIL MIT ZWISCHENLAGEN UND VERFAHREN ZU SEINER HERSTELLUNG**
FIBRE COMPOUND COMPONENT WITH INTERMEDIATE LAYERS AND METHOD FOR PRODUCING THE SAME
COMPOSANT COMPOSITE FIBREUX POURVU DE COUCHES INTERMÉDIAIRES ET SON PROCÉDÉ DE FABRICATION

(30) Priorität: 13.04.2018 DE 102018108851
(43) Veröffentlichungstag der Anmeldung: 16.10.2019
(73) Patentinhaber: Deutsches Zentrum für Luft- und Raumfahrt e.V., 51147 Köln (DE)
(72) Erfinder: Mahrholz, Thorsten, 38228 Salzgitter (DE); Haunerdinger, Johannes, 83367 Petting (DE)
(74) Vertreter: REHBERG HÜPPE + PARTNER

(56) Entgegenhaltungen:
- EP-A1- 2 492 087
- EP-A2- 2 363 282

## Beschreibung

### TECHNISCHES GEBIET DER ERFINDUNG

Die Erfindung bezieht sich auf ein Faserverbundbauteil, wobei in einem sich längs einer Hauptfläche erstreckenden Bereich mehrere parallel zu der Hauptfläche verlaufende Faserlagen und mehrere parallel zur der Hauptfläche verlaufende Zwischenlagen in eine Harzmatrix eingebettet sind, und auf ein Verfahren zur Herstellung eines solchen Faserverbundbauteils. Insbesondere bezieht sich die Erfindung auf ein Faserverbundbauteil mit den Merkmalen des Oberbegriffs des unabhängigen Patentanspruchs 1 und auf ein Verfahren mit den Merkmalen des Oberbegriffs des unabhängigen Patentanspruchs 11.

### STAND DER TECHNIK

Zum Fügen von mehrlagigen Faserverbundbauteilen werden häufig Klebeverbindungen und/oder Bolzenverbindungen, d. h. stoffliche und/oder mechanische Fügetechniken eingesetzt. Favorisiert werden mechanische Fügetechniken mit Bolzenverbindungen, weil diese sehr sicher sind. Jedoch kann sich bei mechanischen Fügetechniken durch eine geringe Lochleibungsfestigkeit von Faserverbundwerkstoffen eine Reduzierung der Anschlussgüte ergeben. Bei größer werdenden Faserverbundbauteilen kann die Anschlussgüte nur durch die Integration von weiteren Faserlagen und/oder von Zwischenlagen aus Verstärkungsmaterialen erzielt werden. Beide Vorgehensweisen führen zu einer strukturellen Aufdickung und damit zu einer erheblichen Massezunahme des Faserverbundbauteils. Die Infusion bzw. Injektion von Matrixharz für die Ausbildung der Harzmatrix von Faserverbundwerkstoffen mit flächigen Zwischenlagen erfordert ein spezielles Angussmanagement bzw. Fließkonzept für die Matrixharze. Die flächigen Zwischenlagen stellen Sperrschichten für den Harzfluss dar. Daher können die aus Fertigungssicht äußerst kostengünstigen Injektionstechnologien, die auch als Nasstechnologien bezeichnet werden und die bekannten Verfahren RTM und VARI umfassen, insbesondere für großflächige Strukturen nicht genutzt werden.

Aus Hau, E. Windkraftanlagen: Grundlagen, Technik, Einsatz, Wirtschaftlichkeit. Berlin, Heidelberg: Springer-Verlag, 2008 sind für strukturell hochbelastete Faserverbundbauteile neben einfachen Querbolzenanschlüssen auch Dehnbolzenanschlüsse bekannt. Während sich bei Querbolzenanschlüssen Löcher für Befestigungsbolzen in Querrichtung durch das jeweilige Faserverbundbauteil erstrecken, erstrecken sich bei Dehnbolzenanschlüssen Anschlusslöcher für Dehnbolzen von einer Stirnseite längs der Faserlagen durch das Faserverbundbauteil bis zu in Querlöchern eingesetzten Querbolzen.

Um eine lokale Aufdickung eines mit Zwischenlagen aus Metall verstärkten Faserverbundbauteils zu vermeiden, ist es aus Fink, A. Lokale Metall-Hybridisierung zur Effizienzsteigerung von Hochlastfügestellen in Faserverbundstrukturen. Köln: Deutsches Zentrum für Luft- und Raumfahrt e.V., 2014 bekannt, eine Faserlage und eine Metallzwischenlage gleicher Dicke auf Stoß anzuordnen, so dass eine Faserlagenabschlusskante der Faserlage und eine Zwischenlagenabschlusskante der Zwischenlage parallel zueinander verlaufen. Über den Bereich dieses Stoßes hinweg laufen benachbarte Faserlagen durch. Dieses bekannte Konzept ist nur für relativ dicke und entsprechend bei der Herstellung des Faserverbundbauteils schlecht verformbare Zwischenlagen aus Metall geeignet.

Aus der EP 2 363 282 A2 ist ein Verbundwerkstoff aus mehreren Faserverbundschichten und einem Verstärkungsbereich mit Verstärkungsschichten aus einem die Faserverbundschichten verstärkenden Material bekannt. In den Verstärkungsschichten sind Perforationen vorgesehen. In dem Bereich, in welchem die Faserverbundschichten mit den Verstärkungsschichten versehen sind, sind mehrere Bohrungen durch den Verbundwerkstoff geführt. In einem Bereich um die Bohrungen sind die Verstärkungsschichten homogen und perforationsfrei ausgebildet. Die Verstärkungsschichten sind verstärkende Metallbleche, die einzelne Faserverbundschichten ersetzen. Die ersetzten Faserverbundschichten sind unterbrochen und liegen auf Stoß zu den verstärkenden Metallschichten an deren Rand. Dabei wird eine gleichbleibende Bauteildicke über den Bereich hinweg realisiert, in dem die Metallschichten die Faserverbundschichten ersetzen. Alternativ erfolgt die Verstärkung mit den Metallschichten durch Schichtzusatz, d. h. verstärkende Metallschichten werden zwischen kontinuierliche Faserverbundschichten eingelegt. Dadurch entstehen an den Rändern der verstärkenden Metallbleche Umlenkungen der Faserverbundschichten, und die Bauteildicke nimmt durch den Schichtzusatz stufenweise zu.

Aus der EP 2 492 087 A1 ist ein Faserverbundbauteil mit den Merkmalen des Oberbegriffs des unabhängigen Patentanspruchs 1 bekannt. Das Faserverbundbauteil weist eine Kante auf, in der die Faserlagen gekrümmt sind. Nach dem Durchlaufen der Krümmung enden zwei innere Faserlagen aus einer ersten Richtung kommend an Faserlagenabschlusskanten. Einer der Faserlagenabschlusskanten liegt dabei eine Zwischenlagenabschlusskante einer aus einer der ersten Richtung entgegengesetzten zweiten Richtung kommenden Zwischenlage gegenüber, bei der es sich ebenfalls um eine Faserlage handelt. Durch die zweite innere Faserlage, deren Faserlagenabschlusskante keine Zwischenlagenabschlusskante gegenüberliegt, variiert die Bauteildicke in dem Bereich, in dem die beiden inneren Faserlagen enden.

### AUFGABE DER ERFINDUNG

Der Erfindung liegt die Aufgabe zugrunde, ein Faserverbundbauteil mit verbesserten Lochleibungseigenschaften sowie ein Verfahren zu dessen Herstellung aufzuzeigen.

### LÖSUNG

Die Aufgabe der Erfindung wird durch ein Faserverbundbauteil mit den Merkmalen des unabhängigen Patentanspruchs 1 und durch ein Verfahren zu dessen Herstellung mit den Merkmalen des unabhängigen Patentanspruchs 11 gelöst. Die abhängigen Patentansprüche betreffen bevorzugte Ausführungsformen des erfindungsgemäßen Faserverbundbauteils und des erfindungsgemäßen Verfahren zu seiner Herstellung.

### BESCHREIBUNG DER ERFINDUNG

Bei einem erfindungsgemäßen Faserverbundbauteil sind in einem sich längs einer Hauptfläche erstreckenden Bereich mehrere parallel zu der Hauptfläche verlaufende Faserlagen und mehrere ebenfalls parallel zu der Hauptfläche verlaufende Zwischenlagen in eine Harzmatrix eingebettet. Eine erste der Faserlagen endet aus einer ersten Richtung kommend, innerhalb des Bereichs, mit einer ersten Faserlagenabschlusskante und zwischen zwei der ersten Faserlage benachbarten und in der ersten Richtung über den Bereich hinweg durchlaufenden Faserlagen. Eine erste der Zwischenlagen endet aus einer der ersten Richtung entgegengesetzten zweiten Richtung kommend, innerhalb des Bereichs, mit einer parallel zu der ersten Faserlagenabschlusskante verlaufen ersten Zwischenlagenabschlusskante, vor der ersten Faserlagenabschlusskante und zwischen zwei der ersten Zwischenlage benachbarten und in der ersten Richtung über den Bereich hinweg durchlaufenden Faserlagen, wobei mindestens eine der beiden der ersten Zwischenlage benachbarten Faserlagen auch eine der beiden der ersten Faserlage benachbarten Faserlagen ist. Mit anderen Worten endet die erste Zwischenlage entweder zwischen denselben durchlaufenden Faserlagen wie die erste Faserlage, oder zwischen der ersten Zwischenlage und der ersten Faserlage befindet sich eine durchlaufende Faserlage, die dann sowohl zu den beiden der ersten Faserlage benachbarten durchlaufenden Faserlagen als auch zu den der ersten Zwischenlage benachbarten durchlaufenden Faserlagen zählt.

Bei dem erfindungsgemäßen Faserverbundbauteil endet mindestens eine weitere der Zwischenlagen aus der zweiten Richtung kommend, innerhalb des Bereichs, mit einer parallel zu der ersten Zwischenlagenabschlusskante verlaufenden weiteren Zwischenlagenabschlusskante, zwischen zwei der weiteren Zwischenlage benachbarten und in der ersten Richtung über den Bereich hinweg durchlaufenden Faserlagen, zwischen denen weder eine der Faserlagen noch eine andere der Zwischenlage in dem Bereich endet, und vor der ersten Faserlagenabschlusskante. Mit anderen Worten endet die zweite Zwischenlage weder zwischen denselben durchlaufenden Faserlagen wie die erste Faserlage noch zwischen denselben durchlaufenden Faserlagen wie die erste oder irgendeine andere der Zwischenlagen. Zumindest diese zweite Zwischenlage endet daher zwischen anderen durchlaufenden Faserlagen als die erste Faserlage, wobei aber eine der ihr benachbarten durchlaufenden Faserlagen auch eine der der ersten Zwischenlage benachbarten durchlaufenden Faserlagen sein kann.

Zudem ist bei dem erfindungsgemäßen Faserverbundbauteil eine mittlere Zwischenlagendicke derjenigen der Zwischenlagen, die in dem Bereich enden, maximal halb so dick wie eine mittlere Faserlagendicke derjenigen der Faserlagen, die in dem Bereich enden. Dieser Dickenunterschied gleicht die größere Anzahl der in dem Bereich endenden Zwischenlagen gegenüber der Anzahl der in dem Bereich endenden Faserlagen aus. Damit wird das erfindungsgemäße Faserverbundbauteil trotz der in der ersten Richtung hinzukommenden größeren Zahl der Zwischenlagen über den Bereich hinweg nicht dicker. Dass das erfindungsgemäße Faserverbundbauteil über den Bereich hinweg vorteilhafterweise eine gleichbleibende Bauteildicke senkrecht zu der Hauptfläche aufweist, schließt jedoch nicht aus, dass über den Bereich hinweg kleinere Änderungen dieser Bauteildicke auftreten, auch wenn diese nicht beabsichtigt sind.

In aller Regel ist es bei dem erfindungsgemäßen Faserverbundbauteil so, dass auf jeder Seite der beiden der ersten Zwischenlage benachbarten und in der ersten Richtung über den Bereich hinweg durchlaufenden Faserlagen mindestens eine der Zwischenlagen zwischen zwei in der ersten Richtung über den Bereich hinweg durchlaufenden Faserlagen der Faserlagen in dem Bereich endet, zwischen denen keine der Faserlagen in dem Bereich endet. So wird die geringere mittlere Zwischenlagendicke der in dem Bereich endenden Zwischenlagen beiderseits der in dem Bereich endenden ersten Faserlage ausgeglichen.

Um die Zwischenlagen optimal in das erfindungsgemäße Faserverbundbauteil zu integrieren, endet zwischen den beiden Faserlagen jedes Paars von benachbarten Faserlagen der Faserlagen, die über den Bereich hinweg durchlaufen, vorzugsweise nicht mehr als eine der Zwischenlagen mit ihrer Zwischenlagenabschlusskante. Bei mehreren zwischen zwei benachbarten Faserlagen angeordneten vollflächigen Zwischenlagen würde es schwierig, diese bei Herstellung des erfindungsgemäßen Faserverbundbauteils in einem Nassverfahren allseitig in das Matrixharz einzubetten.

Das erfindungsgemäße Faserverbundbauteil kann jedoch grundsätzlich nicht nur in einem Nassverfahren, sondern auch basierend auf Prepregs oder in einem hybriden Verfahren hergestellt werden.

Bei dem erfindungsgemäßen Faserverbundbauteil kann auch eine zweite der Faserlagen aus der ersten Richtung kommend, innerhalb des Bereichs, mit einer parallel zu der ersten Faserlagenabschlusskante verlaufenden zweiten Faserlagenabschlusskante, in der ersten Richtung auf einer Höhe mit der ersten Faserlagenabschlusskante und zwischen zwei in der ersten Richtung über den Bereich hinweg durchlaufenden Faserlagen enden. Bei dem erfindungsgemäßen Faserverbundbauteil gilt grundsätzlich keine Beschränkung dahingehend, dass nur eine einzige der Faserlagen innerhalb des Bereichs endet. Insbesondere wenn eine größere Anzahl von Zwischenlagen bei Betrachtung in der ersten Richtung in dem Bereich beginnen soll, müssen in der Regel auch mehrere Faserlagen in dem Bereich enden. Dabei kann jede der in dem Bereich endenden Faserlagen für sich genommen mehreren der in dem Bereich endenden Zwischenlagen zugeordnet sein. Mehrere Faserlagen können innerhalb des Bereichs auch mit nicht parallel zueinander verlaufenden Faserlagenabschlusskanten und/oder mit in der ersten Richtung nicht auf einer Höhe liegenden Faserlagenabschlusskanten enden. Insbesondere können aber zwei Faserlagen nebeneinander, d. h. mit parallelen Faserlagenabschlusskanten in der ersten Richtung auf einer Höhe enden, wobei die an den Faserlagenabschlusskanten wegfallenden Faserlagen bezüglich der Summe ihrer Faserlagendicken durch in der ersten Richtung anschließende mindestens drei in dem Bereich endende Zwischenlagen ausgeglichen werden. Dabei kann auch bei zwei in dem ersten Bereich nebeneinander endenden Faserlagen darauf verzichtet werden, zwischen den benachbarten durchlaufenden Faserlagen jeweils auch eine Zwischenlage enden zu lassen.

Bei dem erfindungsgemäßen Faserverbundbauteil ist es jedoch generell bevorzugt, wenn zwischen den beiden Faserlagen, die in der ersten Richtung über den Bereich hinweg durchlaufen und zwischen denen eine der Faserlagen mit ihrer Faserlagenabschlusskante endet, jeweils auch eine der Zwischenlagen aus der zweiten Richtung kommend mit einer parallel zu der jeweiligen Faserlagenabschlusskante verlaufenden Zwischenlagenabschlusskante vor der jeweiligen Faserlagenabschlusskante enden zu lassen.

Weiterhin ist es bevorzugt, wenn die Anordnung der Zwischenlagen spiegelsymmetrisch zu einer Mittelebene der ersten Faserlage oder, soweit eine zweite Faserlage vorhanden ist, spiegelsymmetrisch zu einer Mittelebene zwischen der ersten Faserlage und der zweiten Faserlage ist. Hierdurch ergibt sich ein symmetrischer Kraftverlauf bei Ableitung von Kräften über die Faserlagen und die Zwischenlagen über den Bereich hinweg.

Die erste Zwischenlage mit ihrer ersten Zwischenlagenabschlusskante und die weiteren Zwischenlagen mit ihren weiteren Zwischenlagenabschlusskanten können in dem Bereich des erfindungsgemäßen Faserverbundbauteils in der zweiten Richtung auf einer Höhe vor der ersten Faserlagenabschlusskante enden. Dann laufen alle Zwischenlagen in der zweiten Richtung bis auf dieselbe Höhe in den Bereich hinein. Alternativ können die erste Zwischenlage mit ihrer ersten Zwischenlagenabschlusskante und die weiteren Zwischenlagen mit ihren weiteren Zwischenlagenabschlusskanten in der zweiten Richtung in einer <- oder >-förmigen, d. h. allgemeiner einer V-, pfeil- oder vogelflugförmigen Formation vor der ersten Faserlagenabschlusskante enden. Mit einer <-förmigen Formation ist eine V-förmige Formation gemeint, bei der die erste Zwischenlage in der zweiten Richtung am weitesten in den Bereich hinein läuft und die weiteren in dem Bereich endenden Zwischenlagen mit zunehmendem Abstand zu der ersten Zwischenlage weniger weit in den Bereich hineinlaufen. Mit einer >-förmigen Formation ist eine V-förmige Formation gemeint, bei der die erste Zwischenlage am wenigsten weit in der zweiten Richtung in den Bereich hinein läuft und die weiteren in dem Bereich endenden Zwischenlagen auf beiden Seiten der ersten Zwischenlage mit zunehmendem Abstand zu der ersten Zwischenlage immer weiter in der zweiten Richtung in den Bereich hineinlaufen. Auch im letzteren Fall enden die weiteren Zwischenlagen in der Regel in der zweiten Richtung noch vor der ersten Faserlagenabschlusskante, um eine Aufdickung des erfindungsgemäßen Faserverbundbauteils in dem Bereich zu vermeiden.

Wenn mehrere Faserlagen aus der ersten Richtung kommend in dem Bereich enden und jeweils für sich genommen durch mehrere aus der zweiten Richtung kommende in dem Bereich endende Zwischenlagen in Bezug auf ihre jeweilige Faserlagendicke kompensiert werden, können auch diese mehreren Faserlagen in einer <- oder >-förmigen Formation in dem Bereich enden.

Hinsichtlich der Zwischenlagen ist anzumerken, dass von diesen bei dem erfindungsgemäßen Faserverbundbauteil zwar keine in der zweiten Richtung über den Bereich hinweg durchlaufen muss, dass dies aber auch nicht ausgeschlossen ist. So können ohne weiteres ein oder mehrere Zwischenlagen in der zweiten Richtung über den Bereich hinweg durchlaufen, so dass, in der ersten Richtung betrachtet, über den Bereich hinweg die Anzahl der Zwischenlagen nicht von null sondern von einem anderen Wert beginnend ansteigt.

Um den Dickenunterschied zwischen der Faserlagendicke der in dem ersten Bereich endenden Faserlagen und der Zwischenlagendicke der in dem Bereich endenden Zwischenlagen lokal anzugleichen, kann in der zweiten Richtung vor der Zwischenlagenabschlusskante mindestens einer der in dem Bereichen endenden Zwischenlagen eine Zwickelfüllung in das Matrixharz eingebettet sein. Wenn gegenüber der jeweiligen Zwischenlage eine Faserlage endet, gleicht die Zwickelfüllung den Dickenunterschied zwischen der Zwischenlage und der Faserlage aus. Wenn zwischen denselben durchlaufenden Faserlagen in der zweiten Richtung vor der jeweiligen Zwischenlage jedoch keine Faserlage endet, gleicht die Zwickelfüllung die Zwischenlagendicke der Zwischenlage aus. Die Zwickelfüllung kann ein separater in das Matrixharz eingebetteter Formkörper sein. Es kann sich auch um in das Matrixharz eingebettete Fasern handeln, die längs der jeweiligen Zwischenlagenabschlusskante durchlaufen können. Die Zwickelfüllung verhindert in jedem Fall sowohl die Ausbildung von Bereichen des Matrixharzes vor der jeweiligen Zwischenlagenabschlusskante mit nur geringem Verstärkungsgrad als auch eine starke Richtungsänderung der angrenzenden durchlaufenden Faserlagen über die Zwischenlagenabschlusskante hinweg. Sowohl Bereiche des Matrixharzes mit geringem Verstärkungsgrad als auch starke Richtungsänderungen der Faserlagen über die Zwischenlagenabschlusskante hinweg sind für die massebezogene Leistungsfähigkeit des erfindungsgemäßen Faserverbundbauteils von Nachteil.

Typischerweise entfällt bei dem erfindungsgemäßen Faserverbundbauteil auf jede der in dem Bereich endenden Faserlagen eine begrenzte Anzahl von in dem Bereich endenden Zwischenlagen, die typischerweise nicht zweistellig ist. Mindestens beträgt das Verhältnis der in dem Bereich endenden Zwischenlagen zu den in dem Bereich endenden Faserlagen 2:1. Häufig liegt es bei 3:1 oder höher. In aller Regel überschreitet es jedoch nicht 9:1. Das Verhältnis von 3:1 ergibt sich, wenn drei Zwischenlagen gegenüber einer Faserlage enden.

Die in dem Bereich endenden Zwischenlagen können gleiche Zwischenlagendicken aufweisen, ebenso wie die in dem Bereich endenden Faserlagen gleiche Faserlagendicken aufweisen können. Insbesondere die in dem Bereich endenden Zwischenlagen können aber auch unterschiedliche Zwischenlagendicken aufweisen. Dabei kann z. B. eine Zwischenlage, die zwischen denselben in der ersten Richtung durchlaufenden Faserlagen endet wie eine Faserlage, dicker sein als Zwischenlagen, die zwischen über den Bereich hinweg durchlaufenden Faserlagen enden, zwischen denen keine Faserlage in dem Bereich endet.

Die Harzmatrix des erfindungsgemäßen Faserverbundbauteils ist vielfach duroplastisch. Das heißt, das Faserverbundbauteil wird unter chemischer oder reaktiver Aushärtung der Harzmatrix hergestellt und erlangt so eine dauerhafte Gestalt.

Jede der in dem Bereich endenden Zwischenlagen kann in der zweiten Richtung bis an ihre Zwischenlagenabschlusskante und quer zu der zweiten Richtung durchlaufen, d. h. bis an die Abschlusskante eine zusammenhängende Zwischenlage sein. Dabei kann jede der Zwischenlagen unabhängig von den anderen aus einer Gruppe von Zwischenlagen ausgewählt sein, die insbesondere Kunststofffolien, Metallfolien, Metallbleche, Organobleche, Faserverbunde, Faserhalbzeuge, Hybridwerkstoffe und Laminate der voranstehend genannten Materialien umfasst. Von besonderem Interesse sind Zwischenlagen aus Kunststofffolien, Metallfolien, Metallblechen und Organoblechen oder aus Laminaten, die solche Folien oder Bleche umfassen. Typischerweise weist bei dem erfindungsgemäßen Faserverbundbauteil mindestens eine der in dem Bereich endenden Zwischenlagen eine andere Zusammensetzung auf als jede der in dem Bereich endenden Faserlagen. Meistens wird es sogar so sein, dass keine der in dem Bereich aus der zweiten Richtung kommend endenden Zwischenlagen dieselbe Zusammensetzung aufweist wie eine der in dem Bereich aus der ersten Richtung kommend endenden Faserlagen. Die Hauptanwendung des erfindungsgemäßen Faserverbundbauteils besteht darin, Zwischenlagen nur über einen Teil des Faserverbundbauteils hinweg vorzusehen und diese in dem Bereich enden zu lassen.

Bei den angesprochenen bevorzugten Zwischenlagen aus oder unter Verwendung von Folien oder Blechen kann es sich als schwierig erweisen, diese vollständig in das Matrixharz einzubetten insbesondere bei Anwendung einer Nasstechnologie zur Herstellung des Faserverbundbauteils. Diese Problematik kann verringert oder sogar beseitigt werden, indem mindestens eine der in dem Bereich endenden Zwischenlagen Durchbrechungen und/oder eine Oberflächenstrukturierung aufweist. Zudem sorgen die Durchbrechungen und/oder die Oberflächenstrukturierung für eine vergrößerte Kontaktfläche für eine stoffschlüssige Anbindung der jeweiligen Zwischenlage an das Matrixharz und bei Durchbrechungen auch für eine zusätzliche formschlüssige Einbettung der jeweiligen Zwischenlage in das Matrixharz.

Zum Fügen mit Bolzenverbindungen kann das erfindungsgemäße Faserverbundbauteil mit Querlöchern versehen sein. Diese Querlöcher erstrecken sich in der Regel durch die Zwischenlagen hindurch oder grenzen zumindest unmittelbar an diese an, um mit Hilfe der Zwischenlagen die Lochleibungsfestigkeit gegenüber herkömmlichen Faserverbundbauteilen zu erhöhen.

Wenn die Zwischenlagen des erfindungsgemäßen Faserverbundbauteils mit Durchbrechungen und/oder einer Oberflächenstrukturierung versehen sind, können diese Durchbrechungen bzw. kann diese Oberflächenstrukturierung lokal angrenzend an die Querlöcher vorgesehen sein. Insbesondere dann können die Querlöcher effektiv als Angusskanäle bei der Herstellung des Faserverbundbauteils genutzt werden, von denen die Bereiche der Zwischenlagen mit den Durchbrechungen und/oder der Oberflächenstrukturierung abzweigen.

Weiterhin können sich von den Querlöchern aus längs der Hauptfläche Anschlusslöcher durch das Faserverbundbauteil hindurch erstrecken. Vorzugsweise erstrecken sich diese Anschlusslöcher jedoch nicht durch die Zwischenlagen hindurch, weil derart durchlöcherte Zwischenlagen zumindest angrenzend an das jeweilige Querloch keine Funktion im Sinne einer Verbesserung der Lochleibungssteifigkeit hätten.

Bei einem erfindungsgemäßen Verfahren zur Herstellung eines Faserverbundbauteils mit einem sich längs einer Hauptfläche erstreckenden Bereich, in dem mehrere parallel zu der Hauptfläche verlaufende Faserlagen und mehrere parallel zu der Hauptfläche verlaufende, nicht aus Fasern bestehende Zwischenlagen in einer Harzmatrix eingebettet sind, das insbesondere zur Herstellung eines erfindungsgemäßen Faserverbundbauteils geeignet ist, wird aus den Faserlagen und den Zwischenlagen ein Stapel ausgebildet, wird der Stapel mit Matrixharz infiltriert und wird das Matrixharz zu der Harzmatrix ausgehärtet. Das heißt, das erfindungsgemäße Verfahren zählt zur Nasstechnologie. Gekennzeichnet ist das erfindungsgemäße Verfahren dadurch, dass in dem Stapel quer zu der Hauptfläche verlaufende Löcher in den Zwischenlagen so miteinander fluchten, dass mindestens ein von außen durch die fluchtenden Löcher in mehreren der Zwischenlagen in den Stapel hineinführender Matrixharzzufuhrkanal ausgebildet wird und dass über den mindestens einen Matrixharzzufuhrkanal Matrixharz in den Stapel injiziert wird. Die Sperrwirkung der nicht aus Fasern bestehenden Zwischenlagen wird bei dieser Vorgehensweise mit Hilfe des mindestens einen Matrixharzzufuhrkanals kompensiert.

Dabei kann sich der mindestens eine Matrixharzzufuhrkanal auch durch mit den Löchern in den Zwischenlagen korrespondierende Löcher in den Faserlagen erstrecken. Diese Löcher in den Faserlagen sind ebenso wie die Löcher in den Zwischenlagen insbesondere dann unkritisch, wenn der mindestens eine Matrixharzzufuhrkanal nach dem Aushärten des Matrixharzes zur Ausbildung eines Querlochs ausgebohrt wird.

Wenn nach der Ausbildung des Querlochs noch ein sich längs der Hauptfläche bis zu dem Querloch erstreckendes Anschlussloch in das Faserverbundbauteil eingebracht wird, ist es besonders bevorzugt, wenn überlappend mit dem später eingebrachten Anschlussloch durch Ausnehmungen aus den Faserlagen ein Freiraum in dem Stapel belassen wird, um einen Abzweig von dem mindestens einen Matrixharzzufuhrkanal auszubilden. Dieser Freiraum erstreckt sich vorzugsweise jedoch ebenso wie das Anschlussloch nicht in die Zwischenlagen hinein.

Die Infiltration des Stapels mit dem Matrixharz über den Matrixharzzufuhrkanal und/oder dessen Abzweig wird noch verbessert, wenn mindestens eine der Zwischenlagen angrenzend an den Matrixharzzufuhrkanal und/oder seinen Abzweig mit einer Oberflächenstrukturierung versehen wird. Konkret kann diese Oberflächenstrukturierung durch dreidimensionales Verformen der Zwischenlage und/oder durch lokales Materialentfernen von der mindestens einen Zwischenlage ausgebildet werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Querloch die Rede ist, ist dies so zu verstehen, dass genau ein Querloch, zwei Querlöcher oder mehr Querlöcher vorhanden sind. Die in den Patentansprüchen angeführten Merkmale können durch andere Merkmale ergänzt werden oder die einzigen Merkmale sein, aus denen das jeweilige Erzeugnis besteht oder die das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Bereich eines erfindungsgemäßen Faserverbundbauteils, in dem aus einer ersten Richtung kommende Faserlagen und aus einer der ersten Richtung entgegengesetzten zweiten Richtung kommende Zwischenlagen enden.
- **Fig. 2**: zeigt in gegenüber Fig. 1 vergrößertem Maßstab eine in dem Bereich des Faserverbundbauteils endende erste der Faserlagen und mehrere der gegenüber der ersten der Faserlage endende Zwischenlagen.
- **Fig. 3**: illustriert die Dickenverhältnisse der in dem Bereich endenden ersten Faserlage und der ihre gegenüber endenden Zwischenlagen in einem gegenüber Fig. 2 modifizierten Ausführungsbeispiel.
- **Fig. 4**: zeigt illustriert eine weitere Modifikation in Bezug auf Dickenverhältnisse der endenden ersten Faserlage und der ihr gegenüber endenden Zwischenlagen.
- **Fig. 5**: illustriert noch eine weitere Ausführungsform des erfindungsgemäßen Faserverbundbauteils in Bezug auf die Anordnung der Zwischenlagen, die gegenüber der ersten Faserlage enden.
- **Fig. 6**: illustriert eine Variante der Ausführungsform gemäß Fig. 5.
- **Fig. 7**: illustriert zwei in dem Bereich des Faserverbundbauteils endende Faserlagen und ihnen gegenüber endende Zwischenlagen bei einer weiteren Ausführungsform des erfindungsgemäßen Faserverbundbauteils.
- **Fig. 8**: zeigt ein Querloch und ein Anschlussloch in einem erfindungsgemäßen Faserverbundbauteil in einer perspektivischen Ansicht (die Darstellungen der Fig. 1 bis 7 sind Schnittansichten orthogonal zu einer Hauptfläche und längs der ersten und zweiten Richtung des erfindungsgemäßen Faserverbundbauteils).
- **Fig. 9**: ist eine Draufsicht auf eine Oberfläche des Faserverbundbauteils mit dem Querloch gemäß Fig. 8.
- **Fig. 10**: ist ein Querschnitt durch ein Detail einer Ausführungsform des erfindungsgemäßen Faserverbundbauteils, der orthogonal zu der Hauptfläche und der ersten und zweiten Richtung verläuft.
- **Fig. 11**: ist ein Ablaufdiagramm zu dem erfindungsgemäßen Verfahren, mit dem das erfindungsgemäße Faserverbundbauteil herstellbar ist.

### FIGURENBESCHREIBUNG

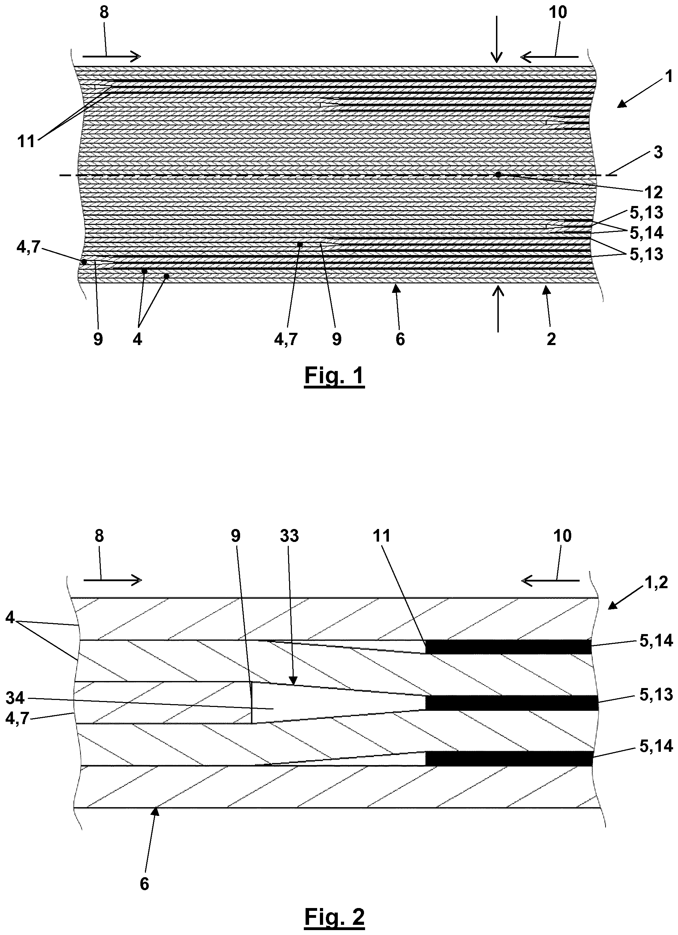

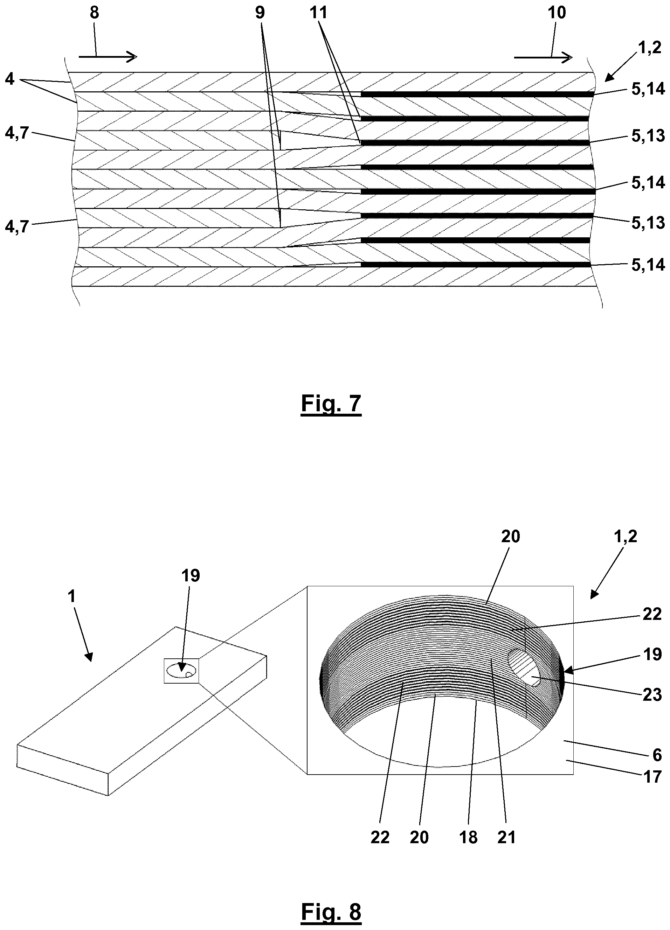

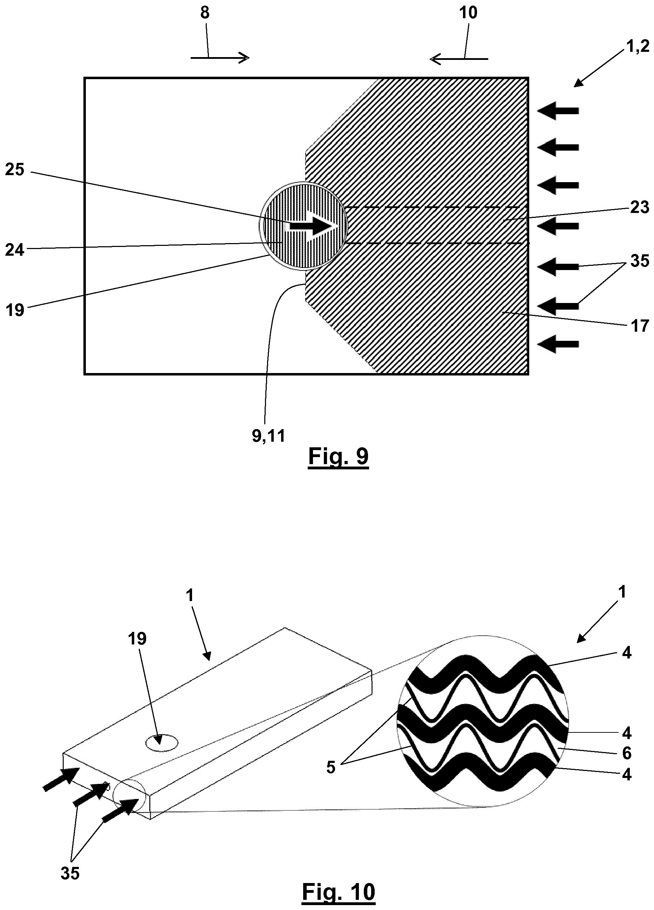

Das Faserverbundbauteil 1, von dem ein Bereich 2 in **Fig. 1** dargestellt ist, erstreckt sich längs einer Hauptfläche 3. Auch wenn die Hauptfläche 3 hier eben dargestellt ist, kann sie in einer oder in mehreren Richtungen gekrümmt sein. Das Faserverbundbauteil 1 umfasst eine Mehrzahl von Faserlagen 4 und eine Mehrzahl von Zwischenlagen 5, die längs der Hauptfläche 3 verlaufen und in eine Harzmatrix 6 eingebettet sind. Dabei enden in dem Bereich 2 einige Faserlagen 7 der Faserlagen 4 aus einer ersten Richtung 8 kommend mit einer Faserlagenabschlusskante 9. Konkret enden in dem oberen Teil und dem unteren Teil des Bereichs 2 jeweils drei Faserlagen 7 mit einer Faserlagenabschlusskante 9. Dabei sind die sechs Faserlagenabschlusskanten 9 in einer >-förmigen Formation angeordnet, d. h. die jeweils äußeren Faserlagen 7 sind kürzer und enden daher in der Richtung 8 eher als die inneren Faserlagen 7. Gegenüber jeder der Faserlagenabschlusskanten 9 enden aus einer der ersten Richtung 8 entgegengesetzten zweiten Richtung 10 kommend jeweils mehrere der Zwischenlagen 5 mit einer Zwischenlagenabschlusskante 11. Die Dickenverhältnisse der endenden Faserlagen 7 und der ihnen gegenüber endenden Zwischenlagen 5 sind so gewählt, dass eine Bauteildicke 12 über den Bereich 2 hinweg längs der Hauptfläche 3 nicht variiert. Trotz der in dem Bereich 2 beginnenden Zwischenlagen 5 erfährt das Faserverbundbauteil 1 also keine Aufdickung in dem Bereich 2. Die Zwischenlagen 5 sind insbesondere dazu vorgesehen, eine Lochleibungssteifigkeit des Faserverbundbauteils 1 zu erhöhen, wie im Zusammenhang mit Fig. 8 und 10 näher erläutert werden wird.

**Fig. 2** illustriert ein Detail eines Ausführungsbeispiels des Faserverbundbauteils 1, bei dem in dem Bereich 2 gegenüber der Faserlagenabschlusskante 9 der endenden Faserlage 7 drei Zwischenlagen 5 mit ihren Zwischenlagenabschlusskanten 11 enden. Dabei endet zwischen denselben in der ersten Richtung 8 durchlaufenden Faserlagen 4, zwischen denen auch die Faserlage 7 endet, eine erste Zwischenlage 13, während weitere Zwischenlagen 14 der Zwischenlagen 5 auf beiden Seiten dieser Zwischenlage 13 zwischen in der ersten Richtung 8 durchlaufenden Faserlagen 4 enden, zwischen denen keine Faserlage 7 endet. Die Zwischenlagenabschlusskanten 11 verlaufen parallel zu der Faserlagenabschlusskante 9 in einem kleinen Abstand in der ersten Richtung 8 und der zweiten Richtung 10. Die gleich großen Zwischenlagendicken der drei endenden Zwischenlagen 5 beträgt etwa 1/3 der Faserlagendicke der endenden Faserlage 7. Anders gesagt wird die Faserlagendicke der endenden Faserlage 7 auf die drei vor ihr endenden Zwischenlagen 5 aufgeteilt. In einem sich vor der Faserlagenabschlusskante 9 ausbildenden Zwickel 33 kann eine Zwickelfüllung 34 angeordnet sein. Ansonsten wird der Zwickel 14 durch die Harzmatrix 6 ausgefüllt, in die die Faserlagen 4 und die Zwischenlagen 5 eingebettet sind.

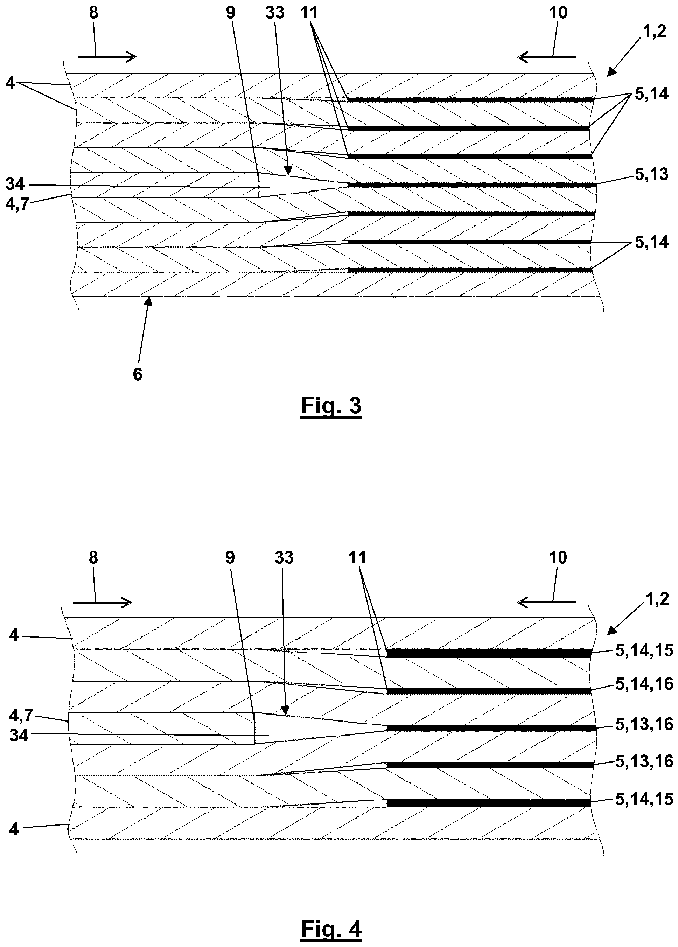

**Fig. 3** stellt die Dickenverhältnisse dar, die sich ergeben, wenn bei dem Faserverbundbauteil 1 in dem Bereich 2 eine mit ihrer Faserlagenabschlusskante 9 endende Faserlage 7 in insgesamt sieben gleich dicke Zwischenlagen 5 übergeht, von denen die Zwischenlage 13 mit ihrer Zwischenlagenabschlusskante 11 zwischen denselben durchlaufenden Faserlagen 4 endet wie die Faserlage 7.

**Fig. 4** zeigt, dass die Zwischenlagen, die gegenüber der Faserlage 7 enden, nicht alle von gleicher Zwischenlagedicke sein müssen. Konkret sind hier die beiden äußeren von insgesamt fünf Zwischenlagen 15 dicker als die drei inneren Zwischenlagen 16. Die mittlere Zwischenlagendicke der vor der Faserlage 7 endenden Zwischenlagen 5 beträgt hier 1/5 der Faserlagendicke der Faserlage 7. In Fig. 3 liegt diese mittlere Zwischenlagendicke bei 1/7 der Faserlagendicke und in Fig. 2 bei 1/3.

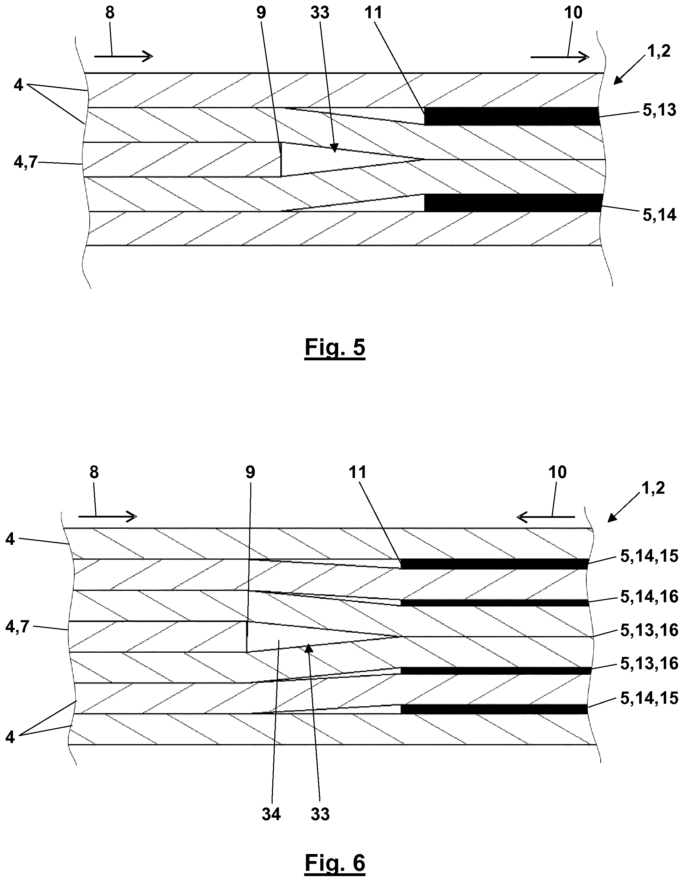

Bei der Ausführungsform des Faserverbundbauteils 1 gemäß **Fig. 5** endet keine der Zwischenlagen 5 zwischen denselben durchlaufenden Faserlagen 4 wie die in dem Bereich 2 endende Faserlage 7. Vielmehr enden zwischen jeweils einer auch der Faserlage 7 benachbarten durchlaufenden Faserlage 4 und einer weiteren Faserlage 4 jeweils eine Zwischenlage 5. Diese beiden Zwischenlagen 5 haben jeweils eine Zwischenlagendicke 5, die halb so dick ist wie die Faserlagendicke der Faserlage 7.

In der Ausführungsform des Faserverbundbauteils 1 gemäß **Fig. 6** endet ebenfalls keine der Zwischenlagen zwischen denselben durchlaufenden Faserlagen 4 wie die in dem Bereich 2 endende Faserlage 7. Hier enden gegenüber der Faserlagenabschlusskante 9 um eine bzw. zwei Faserlagen in beiden Richtungen versetzt zwei innere dünnere Zwischenlagen 16 und zwei äußere dickere Zwischenlagen 15. Die mittlere Zwischenlagendicke beträgt hier 1/4 der Faserlagendicke der endenden Faserlage 7.

**Fig. 7** illustriert eine Ausführungsform des Faserverbundbauteils 1, bei der zwei Faserlagen 7 in dem Bereich 2 mit ihren Faserlagenabschlusskanten 9 enden. Ihnen gegenüber enden hier insgesamt acht Zwischenlagen 5 gleicher Zwischenlagendicke, wobei zwei erste Zwischenlagen 13 zwischen denselben durchlaufenden Faserlagen 4 wie die Faserlagen 7 enden und weitere Zwischenlagen 14 zwischen anderen Zwischenlagen 4. Die mittlere Zwischenlagendicke beträgt auch hier 1/4 der mittleren Faserlagendicke der Faserlagen 7.

Bei allen in den Fig. 1 bis 7 gezeigten Ausführungsformen des erfindungsgemäßen Faserverbundbauteils ist die Anordnung der Zwischenlagen 5 bezüglich der ihre Dicke ausgleichenden endenden Faserlage(n) 7 symmetrisch. In den Ausführungsformen der Fig. 1 bis 6 ist die Symmetrie gegenüber der jeweils einen endenden Faserlage 7 selbst gegeben. Bei der Ausführungsform gemäß Fig. 7 besteht die Symmetrie gegenüber einer Mittelebene zwischen den beiden endenden Faserlagen 7. Während alle Fig. 1 bis 7 andeuten, dass die Zwischenlagenabschlusskante auf einer Höhe in der zweiten Richtung 10 liegen, können die Zwischenlagenabschlusskanten 11 auch in einer V-förmigen Formation gegenüber der Faserlagenabschlusskante 9 angeordnet sein, wie bereits in der Beschreibung der Erfindung dargelegt wurde.

**Fig. 8** ist ein perspektivischer Blick auf eine Oberfläche 17 eines erfindungsgemäßen Faserverbundbauteils 1. In die Oberfläche 17 ist ein bis auf die gegenüberliegende Oberfläche 18 reichendes Querloch 19 eingebracht. Das Querloch 19 erstreckt sich durch Deckschichten 20 und eine Mittelschicht 21 sowie dazwischen liegende Zwischenschichten 22 des Faserverbundbauteils. In den Deckschichten 20 und der Mittelschicht 21 sind nur Faserlagen in die Harzmatrix 6 eingebettet, während in den Zwischenschichten 22 auch Zwischenlagen vorgesehen sind. Hiermit wird die Lochleibungssteifigkeit des Querlochs 19 erhöht. Durch die Zwischenschicht 22 und damit nicht durch die Zwischenlagen erstreckt sich ein Anschlussloch 23, über das ein Zugelement an einem in das Querloch 19 eingesetzten Querbolzen angreifen kann.

**Fig. 9** zeigt die Lage eines solchen Querbolzens 24 in dem Querloch 19 und einen darauf abgestimmten Verlauf der Faserlagenabschlusskanten 9 und Zwischenlagenabschlusskanten 11 zur effizienten Erhöhung der Lochleibungssteifigkeit des Querlochs 19 für eine Belastung in Richtung eines Pfeils 25. Die die Belastung 25 abstützende Gegenkraft ist durch Pfeile 35 angezeigt, die über die gesamte Breite des Faserverbundbauteils 1 verteilt sind. Die Faserlagenabschlusskanten 9 und die Zwischenlagenabschlusskanten 11 laufen dabei nicht geradlinig quer zu den Richtungen 8 und 10 über die gesamte Breite des Faserverbundbauteils 1 durch, sondern sind zum Rand des Faserverbundbauteils 1 hin abgewinkelt.

**Fig. 10** illustriert Zwischenlagen 5 mit einer Oberflächenstrukturierung. Konkret sind die Zwischenlagen 5 hier wellenförmig profiliert. Entsprechend werden auch die angrenzenden Faserlagen 4 beim Komprimieren eines Stapels aus den Zwischenlagen 5 und den Faserlagen 4 wellenförmig deformiert. Es bleiben aber in der Oberflächenstruktur der Zwischenlagen 5 Freiräume, die sich durchgehend in den Richtungen 8 und 10 erstrecken und die das Infiltrieren des Stapels der Zwischenlagen 5 und der Faserlagen 4 beim Herstellen des Faserverbundbauteils 1 in Nasstechnologie erleichtern. Diese Herstellung wird insbesondere erleichtert, wenn der Bereich eines späteren Querlochs 19 als zusätzlicher Matrixharzzufuhrkanal beim Infiltrieren des Stapels mit Matrixharz genutzt wird. Auch der Bereich eines zukünftigen Anschlusslochs 23 kann entsprechend genutzt werden. Zusätzlich zu der Oberflächenstrukturierung der Zwischenlagen 5, wie sie in Fig. 10 gezeigt ist, können die häufig grundsätzlich flächenförmigen Zwischenlagen 5 mit lokalen Durchbrechungen für den Durchtritt von Matrixharz versehen werden.

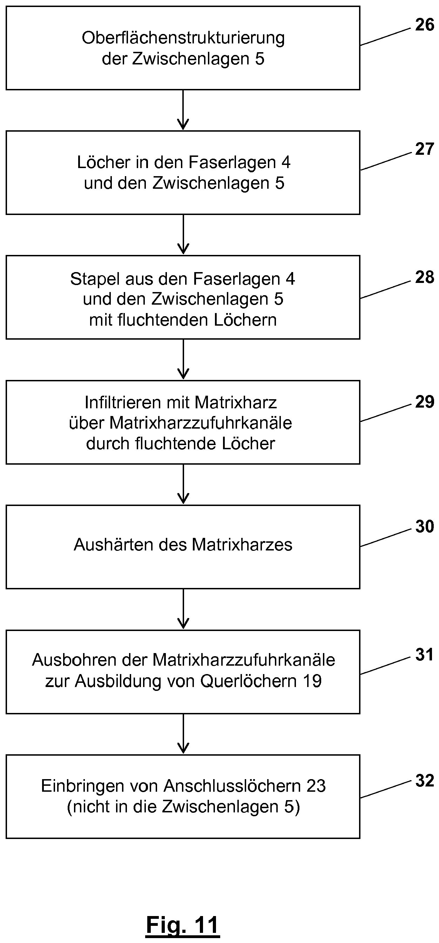

Das in **Fig. 11** in Form eines Ablaufdiagramms dargestellte erfindungsgemäße Herstellungsverfahren, mit dem erfindungsgemäße Faserverbundbauteile herstellbar sind, beginnt mit einer Oberflächenstrukturierung 26 der Zwischenlagen 5. Hier können zusätzlich auch Durchbrechungen in die Zwischenlagen 5 eingebracht werden. In jedem Fall werden in einem nachfolgenden Schritt 27 Löcher in die Zwischenlagen 5 und vorzugsweise auch in die Faserlagen 4 eingebracht, die dem späteren Querloch 19 entsprechen. Dann erfolgt ein Stapeln 28 der Faserlagen 4 und der Zwischenlagen 5 mit fluchtenden Löchern im Bereich der zukünftigen Querlöcher 19 und auch unter erfindungsgemäßer Anordnung der Zwischenlagenabschlusskanten 11 endender Zwischenlagen 5 gegenüber Faserlagenabschlusskanten 9 endender Faserlagen 4. Ein anschließendes Infiltrieren 29 mit Matrixharz erfolgt u. a. über Matrixharzzufuhrkanäle, die durch die fluchtenden Löcher in den Faserlagen 4 und Zwischenlagen 5 gebildet sind. Auf ein Aushärten 30 des Matrixharzes erfolgt ein Ausbohren 31 der Matrixharzzufuhrkanäle, die durch die fluchtenden Löcher gebildet wurden, zur Ausbildung der Querlöcher 19 und schließlich ein Einbringen 31 der zu den Querlöchern 19 führenden Anschlusslöcher 23. Dabei erstrecken sich die Anschlusslöcher 23 wie schon ausgeführt vorzugsweise nicht durch die Zwischenlagen 5.

### BEZUGSZEICHENLISTE

- 1: Faserverbundbauteil
- 2: Bereich
- 3: Hauptfläche
- 4: Faserlage
- 5: Zwischenlage
- 6: Harzmatrix
- 7: endende (erste oder zweite) Faserlage
- 8: erste Richtung
- 9: Faserlagenabschlusskante
- 10: zweite Richtung
- 11: Zwischenlagenabschlusskante
- 12: Bauteildicke
- 13: (erste) Zwischenlage
- 14: weitere Zwischenlage
- 15: äußere Zwischenlage
- 16: innere Zwischenlage
- 17: Oberfläche
- 18: gegenüberliegende Oberfläche
- 19: Querloch
- 20: Deckschicht
- 21: Mittelschicht
- 22: Zwischenschicht
- 23: Anschlussloch
- 24: Querbolzen
- 25: Pfeil, Belastung
- 26: Oberflächenstrukturierung
- 27: Schritt
- 28: Stapeln
- 29: Infiltrieren
- 30: Aushärten
- 31: Ausbohren
- 32: Einbringen
- 33: Zwickel
- 34: Zwickelfüllung
- 35: Pfeil, Gegenkraft

## Patentansprüche

1. Faserverbundbauteil (1),
- wobei in einem sich längs einer Hauptfläche (3) erstreckenden Bereich (2)
- mehrere parallel zu der Hauptfläche (3) verlaufende Faserlagen (4) und
- mehrere parallel zu der Hauptfläche (3) verlaufende Zwischenlagen (5) in eine Harzmatrix (6) eingebettet sind,
- wobei eine erste (7) der Faserlagen (4)
- aus einer ersten Richtung (8) kommend,
- innerhalb des Bereichs (2),
- mit einer ersten Faserlagenabschlusskante (9) und
- zwischen zwei der ersten (7) der Faserlagen (4) benachbarten und in der ersten Richtung (8) über den Bereich (2) hinweg durchlaufenden Faserlagen (4) der Faserlagen (4)
endet und
- wobei eine erste (13) der Zwischenlagen (5)
- aus einer der ersten Richtung (8) entgegengesetzten zweiten Richtung (10) kommend,
- innerhalb des Bereichs (2),
- mit einer parallel zu der ersten Faserlagenabschlusskante (9) verlaufenden ersten Zwischenlagenabschlusskante (11),
- vor der ersten Faserlagenabschlusskante (9) und
- zwischen zwei der ersten (13) der Zwischenlagen (5) benachbarten und in der ersten Richtung (8) über den Bereich (2) hinweg durchlaufenden Faserlagen (4) der Faserlagen (4), wobei mindestens eine der beiden der ersten Zwischenlage (13) benachbarten Faserlagen (4) eine der beiden der ersten Faserlage (4) benachbarten Faserlagen (4) ist,
endet,
- wobei mindestens eine weitere (14) der Zwischenlagen (5)
- aus der zweiten Richtung (10) kommend,
- innerhalb des Bereichs (2),
- mit einer parallel zu der ersten Zwischenlagenabschlusskante (11) verlaufenden weiteren Zwischenlagenabschlusskante (11),
- zwischen zwei der weiteren (14) der Zwischenlagen (5) benachbarten und in der ersten Richtung (8) über den Bereich (2) hinweg durchlaufenden Faserlagen (4) der Faserlagen (4), zwischen denen weder eine der Faserlagen (4) noch eine andere der Zwischenlagen (5) in dem Bereich (2) endet, und
- vor der ersten Faserlagenabschlusskante (9)
endet,
**dadurch gekennzeichnet,**
- **dass** eine mittlere Zwischenlagendicke derjenigen der Zwischenlagen (5), die in dem Bereich (2) enden, maximal halb so groß ist wie eine mittlere Faserlagendicke derjenigen der Faserlagen (4), die in dem Bereich (2) enden, und
- **dass** das Faserverbundbauteil (1) über den Bereich (2) hinweg eine gleichbleibende Bauteildicke senkrecht zu der Hauptfläche (3) aufweist.

2. Faserverbundbauteil (1) nach Anspruch 1, **dadurch gekennzeichnet, dass** auf jeder Seite der beiden der ersten (13) der Zwischenlagen (5) benachbarten und in der ersten Richtung (8) über den Bereich (2) hinweg durchlaufenden Faserlagen (4) mindestens eine der Zwischenlagen (5) zwischen zwei in der ersten Richtung (8) über den Bereich (2) hinweg durchlaufenden Faserlagen (4) der Faserlagen (4) in dem Bereich (2) endet, zwischen denen keine der Faserlagen (4) in dem Bereich (2) endet.

3. Faserverbundbauteil (1) nach Anspruch 2, **dadurch gekennzeichnet, dass** zwischen den beiden Faserlagen (4) jedes Paars von benachbarten Faserlagen (4) der Faserlagen (4), die über den Bereich (2) hinweg durchlaufen, nicht mehr als eine der Zwischenlagen (5) mit ihrer Zwischenlagenabschlusskante (11) endet.

4. Faserverbundbauteil (1) nach einem der vorhergehenden Ansprüche, **dadurch gekennzeichnet, dass** eine zweite (7) der Faserlagen (4)
- aus der ersten Richtung (8) kommend,
- innerhalb des Bereichs (2),
- mit einer parallel zu der ersten Faserlagenabschlusskante (9) verlaufenden zweiten Faserlagenabschlusskante (9),
- in der ersten Richtung (8) auf einer Höhe mit der ersten Faserlagenabschlusskante (9) und
- zwischen zwei der zweiten Faserlage (7) benachbarten und in der ersten Richtung (8) über den Bereich (2) hinweg durchlaufenden Faserlagen (4) der Faserlagen (4) endet.

5. Faserverbundbauteil (1) nach einem der vorhergehenden Ansprüche, **dadurch gekennzeichnet, dass** zwischen den beiden Faserlagen (4), die in der ersten Richtung (8) über den Bereich (2) hinweg durchlaufen und zwischen denen die erste (7) oder die zweite (7) der Faserlagen (4) mit ihrer Faserlagenabschlusskante (9) endet, jeweils eine (13) der Zwischenlagen (5) aus der zweiten Richtung (10) kommend, innerhalb des Bereichs (2), mit einer parallel zu der jeweiligen Faserlagenabschlusskante (9) verlaufenden Zwischenlagenabschlusskante (11), vor der jeweiligen Faserlagenabschlusskante (9) endet.

6. Faserverbundbauteil (1) nach einem der vorhergehenden Ansprüche, **dadurch gekennzeichnet, dass** die Anordnung der in dem Bereich (2) endenden Zwischenlagen (5) spiegelsymmetrisch zu einer Mittelebene der ersten (7) der Faserlagen (4) oder zu einer Mittelebene zwischen der ersten (7) der Faserlagen (4) und der zweiten (7) der Faserlagen (4) ist.

7. Faserverbundbauteil (1) nach einem der vorhergehenden Ansprüche, **dadurch gekennzeichnet, dass** die erste (13) der Zwischenlagen (5) mit ihrer ersten Zwischenlagenabschlusskante (11) und die weiteren (14) der Zwischenlagen (5) mit ihren weiteren Zwischenlagenabschlusskanten (11) in der zweiten Richtung (10)
- auf einer Höhe vor der ersten Faserlagenabschlusskante (9) oder
- vor der ersten Faserlagenabschlusskante (9) in einer V-förmigen Formation in dem Bereich (2) enden.

8. Faserverbundbauteil (1) nach einem der vorhergehenden Ansprüche, **dadurch gekennzeichnet, dass** in der zweiten Richtung (10) vor der Zwischenlagenabschlusskante (11) mindestens einer der in dem Bereich (2) endenden Zwischenlagen (5) eine Zwickelfüllung (34) in die Harzmatrix (6) eingebettet ist.

9. Faserverbundbauteil (1) nach einem der vorhergehenden Ansprüche, **dadurch gekennzeichnet,**
- **dass** mindestens eine der Zwischenlagen (5) Durchbrechungen und/oder eine Oberflächenstrukturierung aufweist und
- **dass** sich quer zu der Hauptfläche (3) durch das Faserverbundbauteil (1) erstreckende Querlöcher (19) durch die Zwischenlagen (5) hindurch erstrecken oder unmittelbar an diese angrenzen,
- wobei die Durchbrechungen und/oder die Oberflächenstrukturierung der mindestens einen der Zwischenlagen (5) lokal angrenzend an die Querlöcher (19) vorgesehen sind/ist.

10. Faserverbundbauteil (1) nach Anspruch 10, **dadurch gekennzeichnet, dass** sich von den Querlöchern (19) aus längs der Hauptfläche (3) erstreckende Anschlusslöcher (23) nicht durch die Zwischenlagen (5) hindurch erstrecken.

11. Verfahren zur Herstellung eines Faserverbundbauteils mit einem sich längs einer Hauptfläche (3) erstreckenden Bereich (2), in dem mehrere parallel zu der Hauptfläche (3) verlaufende Faserlagen (4) und mehrere parallel zu der Hauptfläche (3) verlaufende, nicht aus Fasern bestehende Zwischenlagen (5) in eine Harzmatrix (6) eingebettet sind, insbesondere eines Faserverbundbauteils (1) nach einem der vorhergehenden Ansprüche,
- wobei aus den Faserlagen (4) und den Zwischenlagen (5) ein Stapel ausgebildet wird,
- wobei der Stapel mit Matrixharz infiltriert wird und
- wobei das Matrixharz zu der Harzmatrix (6) ausgehärtet wird,
**dadurch gekennzeichnet,**
- **dass** in dem Stapel quer zu der Hauptfläche (3) verlaufende Löcher in den Zwischenlagen (5) so miteinander fluchten, dass mindestens ein von außen durch die fluchtenden Löcher in mehreren der Zwischenlagen (5) in den Stapel hinein führender Matrixharzzufuhrkanal ausgebildet wird, und
- **dass** über den mindestens einen Matrixharzzufuhrkanal Matrixharz in den Stapel injiziert wird.

12. Verfahren nach Anspruch 11, **dadurch gekennzeichnet,**
- **dass** mindestens eine der Zwischenlagen (5) angrenzend an den Matrixharzzufuhrkanal und/oder seinen Abzweig mit einer Oberflächenstrukturierung (26) versehen wird, wobei, optional, die Oberflächenstrukturierung (26) durch dreidimensionales Verformen der und/oder durch lokales Materialentfernen von der mindestens einen Zwischenlage (5) ausgebildet wird, und/oder
- **dass** sich der mindestens eine Matrixharzzufuhrkanal auch durch mit den Löchern in den Zwischenlagen (5) korrespondierende Löcher in den Faserlagen (4) erstreckt.

13. Verfahren nach Anspruch 11 oder 12, **dadurch gekennzeichnet, dass** der mindestens eine Matrixharzzufuhrkanal nach dem Aushärten des Matrixharzes zur Ausbildung eines Querlochs (19) ausgebohrt wird.

14. Verfahren nach Anspruch 13, **dadurch gekennzeichnet, dass** nach der Ausbildung des Querlochs (19) bis zu dem Querloch (19) ein sich längs der Hauptfläche (3) erstreckendes Anschlussloch (23) in das Faserverbundbauteil (1) eingebracht wird.

15. Verfahren nach Anspruch 14, **dadurch gekennzeichnet,**
- **dass** überlappend mit dem später eingebrachten Anschlussloch (23) durch Ausnehmungen aus den Faserlagen (4) ein Freiraum in dem Stapel belassen wird, um einen Abzweig von dem mindestens einen Matrixharzzufuhrkanal auszubilden,
- wobei, optional, das Anschlussloch (23) nicht in die Zwischenlagen (5) hinein eingebracht wird.

## Claims

1. Fiber compound component (1),
- wherein, in a region (2) extending along a main area (3),
- a plurality of fiber layers (4) extending in parallel to the main area (3) and
- a plurality of intermediate layers (5) extending in parallel to the main area (3) are embedded in a resin matrix (6),
- wherein a first one (7) of the fiber layers (4) ends
- coming out of a first direction (8),
- within the region (2),
- with a first fiber layer termination edge (9) and
- between two fiber layers (4) of the fiber layers (4) being neighbours of the first one (7) of the fiber layers (4) and running through over the region (2) in the first direction (8), and
- wherein a first one (13) of the intermediate layers (5) ends
- coming out of a second direction (10) opposite to the first direction (8),
- within the region (2),
- with an intermediate layer termination edge (11) running in parallel to the first fiber layer termination edge (9),
- in front of the first fiber layer termination edge (9) and
- between two fiber layers (4) of the fiber layers (4) being neighbours of the first one (13) of the intermediate layers (5) and running through over the region (2) in the first direction (8), wherein at least one of the two fiber layers (4) being neighbours of the first intermediate layer (13) is one of the two fiber layers (4) being neighbours of the first fiber layer (4),
- wherein at least a further one (14) of the intermediate layers (5) ends
- coming out of the second direction (10),
- within the region (2),
- with a further intermediate layer termination edge (11) running in parallel to the first intermediate layer termination edge (11),
- between two fiber layers (4) of the fiber layers (4) being neighbours of the further one (14) of the intermediate layers (5) and running through over the region (2) in the first direction (8), between which neither one of the fiber layers (4) nor another one of the intermediate layers (5) ends in the region (2), and
- in front of the first fiber layer termination edge (9),
**characterised in**
- **that** an average intermediate layer thickness of those ones of the intermediate layers (5) which end in the region (2) is at maximum half as high as an average fiber layer thickness of those ones of the fiber layers (4) which end in the region (2), and
- **that** the fiber compound component (1), over the region (2), has a constant component thickness normal to the main area (3).

2. Fiber compound component (1) of claim 1, **characterised in that**, on each side of the two fiber layers (4) being neighbours of the first one (13) of the intermediate layers (5) and running through over the region (2) in the first direction (8), at least one of the intermediate layers (5) ends in the region (2) between two fiber layers (4) of the fiber layers (4) running through over the region (2) in the first direction (8), between which none of the fiber layers (4) ends in the region (2).

3. Fiber compound component (1) of claim 2, **characterised in that** not more than one of the intermediate layers (5) ends with its intermediate layer termination edge (11) between the two fiber layers (4) of each pair of neighbouring fiber layers (4) of the fiber layers (4) running through over the region (2).

4. Fiber compound component (1) of any of the preceding claims, **characterised in that** a second one (7) of the fiber layers (4) ends
- coming out of the first direction (8),
- within the area (2),
- with a second fiber layer termination edge (9) running in parallel to the first fiber layer termination edge (9),
- on a level with the first fiber layer termination edge (9) in the first direction (8) and
- between two fiber layers (4) of the fiber layers (4) being neighbours of the second one (7) of the fiber layers (4) and running through over the region (2) in the first direction (8).

5. Fiber compound component (1) of any of the preceding claims, **characterised in that**, between each two fiber layers (4) which run through over the region (2) in the first direction (8) and between which the first one (7) or the second one (7) of the fiber layers (4) ends with its fiber layer termination edge (9), one (13) of the intermediate layers (5) ends coming out of the second direction (10), within the area (2), with an intermediate layer termination edge (11) running parallel to the respective layer termination edge (9), in front of the respective fiber layer termination edge (9).

6. Fiber compound component (1) of any of the preceding claims, **characterised in that** the arrangement of the intermediate layers (5) ending in the region (2) is mirror symmetric with regard to a middle plane of the first one (7) of the fiber layers (4) or to a middle plane between the first one (7) of the fiber layers (4) and the second one (7) of the fiber layers (4).

7. Fiber compound component (1) of any of the preceding claims, **characterised in that** the first one (13) of the intermediate layers (5), with its first intermediate layer termination edge (11), and the further one (14) of the intermediate layers (5), with its further intermediate layer termination edge (11), end in the second direction (10)
- on a level in front of the first fiber layer termination edge (9) or
- in a V-shape formation in the region (2) in front of the first fiber layer termination edge (9).

8. Fiber compound component (1) of any of the preceding claims, **characterised in that** a filler (34) is embedded in the resin matrix (6) in the direction (10) in front of the intermediate layer termination edge (11) of at least one of the intermediate layers (5) ending in the region (2).

9. Fiber compound component (1) of any of the preceding claims, **characterised in**
- **that** at least one of the intermediate layers (5) has openings and/or a surface structuring and
- **that** cross holes (19) extending through the fiber compound component (1) transversely to the main area (3) extend through the intermediate layers (5) or directly adjoin the intermediate layers (5),
- wherein the openings and/or the surface structuring of the at least one of the intermediate layers (5) is/are provided locally adjoining the cross holes (19).

10. Fiber compound component (1) of claim 10, **characterised in that** connection holes (23) extending away from the cross holes (19) along the main area (3) do not extend through the intermediate layers (5).

11. Method of manufacturing a fiber compound component having a region (2) extending along a main area (3), in which a plurality of fiber layers (4) extending in parallel to the main area (3) and a plurality of intermediate layers (5) extending in parallel to the main area (3) and not consisting of fibers are embedded in a resin matrix (6), particularly a fiber compound component (1) of any of the preceding claims,
- wherein a stack is formed of the fiber layers (4) and the intermediate layers (5),
- wherein the stack is infiltrated with matrix resin, and
- wherein the matrix resin is cured into the resin matrix (6),
**characterised in**
- **that** holes in the intermediate layers (5) running transversely to the main area (3) in the stack fall in line with each other in such a way that at least one matrix resin supply channel is formed, which leads into the stack from the outside through the aligned holes in several of the intermediate layers (5) and
- **that** matrix resin is injected into the stack via the at least one matrix resin supply channel.

12. Method of claim 11, **characterised in**
- **that** at least one of the intermediate layers (5) adjoining the matrix resin supply channel and/or adjoining its off-branch is provided with a surface structuring (26), wherein, optionally, the surface structuring (26) is formed by three dimensional deforming and/or by locally removing material from the at least one intermediate layer (5), and/or
- **that** the at least one matrix resin supply channel also extends through holes in the fiber layers (4) communicating with the holes in the intermediate layers (5).

13. Method of claim 11 or 12, **characterised in that**, after curing the matrix resin, the at least one matrix resin supply channel is bored out for forming a cross hole (19).

14. Method of claim 13, **characterised in that**, after forming the cross hole (19), a connecting hole (23) extending along the main area (3) is worked into the fiber compound component (1) up to the cross hole (19).

15. Method of claim 14, **characterised in**
- **that** a free space overlapping with the later worked connection hole (23) is left in the stack by means of openings in the fiber layers (4) to form an off-branch from the at least one matrix resin supply channel,
- wherein, optionally, the connection hole (23) is not worked into the intermediate layers (5).

## Revendications

1. Pièce composite à fibres (1)
- dans laquelle, dans une zone (2) s'étendant le long d'une surface principale (3),
- plusieurs couches de fibres (4) parallèles à la surface principale (3) et
- plusieurs couches intermédiaires (5) parallèles à la surface principale (3) sont intégrées dans une matrice en résine (6),
- dans laquelle une première (7) des couches de fibres (4)
- provenant d'une première direction (8)
- se termine à l'intérieur de la zone (2),
- avec une première arête de terminaison de couche de fibres (9) et
- entre deux couches de fibres (4) adjacentes aux deux premières (7) des couches de fibres (4) et traversant dans la première direction (8) la zone (2) des couches de fibres (4) et
- dans laquelle une première (13) des couches intermédiaires (5)
- provenant d'une deuxième direction (10) opposée à la première direction (8),
- se termine à l'intérieur de la zone (2),
- avec une première arête de terminaison de couche intermédiaire (11) parallèle à la première arête de terminaison de couche de fibres (9),
- avant la première arête de terminaison de couche de fibres (9) et
- entre deux couches de fibres (4) adjacentes aux premières (13) des couches intermédiaires (5) et traversant dans la première direction (8) la zone (2) des couches de fibres (4), dans laquelle au moins une des deux des couches de fibres (4) adjacentes à la première couche intermédiaire (13) est une des deux couches de fibres (4) adjacentes à une des deux des premières couches de fibres (4),
- dans laquelle au moins une autre (14) des couches intermédiaires (5)
- provenant de la deuxième direction (10)
- se termine à l'intérieur de la zone (2),
- avec une autre arête de terminaison de couche intermédiaire (11) parallèle à la première arête de terminaison de couche intermédiaire (11),
- entre deux couches de fibres (4) adjacentes à l'autre (14) des couches intermédiaires (5) et traversant dans la première direction (8) la zone (2) des couches de fibres, entre lesquelles ni une des couches de fibres (4) ni une autre des couches intermédiaire (5) ne se termine dans la zone (2) et
- avant la première arête de terminaison de couche de fibres (9),
**caractérisée en ce que**
- une épaisseur de couche intermédiaire moyenne des couches intermédiaire (5) qui se terminent dans la zone (2) est au maximum la moitié d'une épaisseur de couche de fibres moyenne des couches de fibres (4) qui se terminent dans la zone (2) et
- la pièce composite à fibres (1) présente, sur la zone (2), une épaisseur de pièce constante perpendiculairement à la surface principale (3).

2. Pièce composite à fibres (1) selon la revendication 1, **caractérisée en ce que**, sur chaque côté des deux couches de fibres adjacentes aux premières (13) des couches intermédiaires (5) et traversant dans la première direction (8) la zone (2), au moins une des couches intermédiaires (5) se termine entre deux couches de fibres (4) traversant dans la première direction (8) la zone (2) des couches de fibres (4) dans la zone (2), entre lesquelles aucune des couches de fibres (4) ne se termine dans la zone (2).

3. Pièce composite à fibres (1) selon la revendication 2, **caractérisée en ce que** entre les deux couches de fibres (4) de chaque paire de couches de fibres (4) adjacentes des couches de fibres (4) qui traversent la zone (2), pas plus d'une des couches intermédiaire (5) ne se termine avec l'arête de terminaison de couche intermédiaire (11).

4. Pièce composite à fibres (1) selon l'une des revendications précédentes, **caractérisée en ce qu'**une deuxième (7) des couches de fibres (4)
- provenant de la première direction (8),
- se termine à l'intérieur de la zone (2),
- avec une deuxième arête de terminaison de couche de fibres (9) parallèle à la première arête de terminaison de couche de fibres (9),
- dans la première direction (8) à une hauteur avec l'arête de terminaison de couche de fibres (9) et
- entre deux couches de fibres (4) adjacentes à la deuxième couche de fibres (7) et traversant dans la première direction (8) la zone (2), des couches de fibres (4).

5. Pièce composite à fibres (1) selon l'une des revendications précédentes, **caractérisée en ce que**, entre les deux couches de fibres (4), qui traversent dans la première direction (8) la zone (2) et entre lesquelles la première (7) ou la deuxième (7) des couches de fibres (4) se termine avec son arête de terminaison de couche de fibres (9), une (13) des couches intermédiaires (5), provenant de la deuxième direction (10), se termine à l'intérieur de la zone (2) avec une arête de terminaison de couche intermédiaire (11) parallèle à l'arête de terminaison de couche de fibres (9) correspondante, avant l'arête de terminaison de couche de fibres (9) correspondant.

6. Pièce composite à fibres (1) selon l'une des revendications précédentes, **caractérisée en ce que** la disposition des couches intermédiaires (5) se terminant dans la zone (2) est symétrique en miroir par rapport à un plan central des premières (7) des couches de fibres (4) ou à un plan central entre les premières (7) des couches de fibres (4) et les deuxièmes (7) des couches de fibres (4).

7. Pièce composite à fibres (1) selon l'une des revendications précédentes, **caractérisée en ce que** la première (13) des couches intermédiaires (5) se termine, avec sa première arête de terminaison de couche intermédiaire (11) et les autres (14) des couches intermédiaires (5) se terminant avec leurs autres arêtes de terminaison de couches intermédiaires (11) dans la deuxième direction (10)
- à une hauteur avant la première arête de terminaison de couches de fibres (9) ou
- avant la première arête de terminaison de couche de fibres (9) dans une formation en V dans la zone (2).

8. Pièce composite à fibres (1) selon l'une des revendications précédentes, **caractérisée en ce que**, dans la deuxième direction (10), avant l'arête de terminaison de couche intermédiaire (11) d'au moins une des couches intermédiaires (5) se terminant dans la zone (2), est intégrée un bourrage (34) dans la matrice en résine (6).

9. Pièce composite à fibres (1) selon l'une des revendications précédentes, **caractérisée en ce que**
- au moins une des couches intermédiaires (5) comprend des évidements et/ou une texturation de surface et
- des trous transversaux (19) s'étendant transversalement par rapport à la surface principale (3) à travers la pièce composite à fibres (1) s'étendant à travers les couches intermédiaires (5) ou sont directement adjacents à celles-ci,
- dans laquelle les évidements et/ou la texturation de surface de l'au moins une des couches intermédiaires (5) sont/est adjacente(s) localement aux trous transversaux (19).

10. Pièce composite à fibres (1) selon la revendication 10, **caractérisée en ce que** des trous de raccordement (23) s'étendant à partir des trous transversaux (19) le long de la surface principale (3) ne s'étendent pas à travers les couches intermédiaires (5).

11. Procédé pour la fabrication d'une pièce composite à fibres avec une zone (2) s'étendant le long d'une surface principale (3), dans laquelle plusieurs couches de fibres (4) parallèles à la surface principale (3) et plusieurs couches intermédiaires (5) parallèles à la surface principale (3) et non constituées de fibres sont intégrées dans une matrice en résine (6), plus particulièrement d'une pièce composite à fibres (1) selon l'une des revendications précédentes,
- dans lequel, à partir des couches de fibres (4) et des couches intermédiaires (5), un empilement est formé,
- dans lequel l'empilement est infiltré avec une résine de matrice et
- dans lequel la résine de matrice est durcie afin d'obtenir une matrice en résine (6), **caractérisé en ce que**
- des trous s'étendant dans l'empilement transversalement par rapport à la surface principale (3) dans les couches intermédiaires (5) sont alignés entre eux de façon à ce qu'au moins un canal d'introduction de résine de matrice conduisant de l'extérieur à travers les trous alignés dans plusieurs des couches intermédiaires (5) vers l'intérieur de l'empilement soit formé et
- une résine de matrice est injectée dans l'empilement par l'intermédiaire de l'au moins un canal d'introduction de résine de matrice.

12. Procédé selon la revendication 11, **caractérisé en ce que**
- au moins une des couches intermédiaires (5) est munie, de manière adjacente au canal d'introduction de résine de matrice et/ou à sa bifurcation, d'une texturation de surface (26), dans lequel, en option, la texturation de surface (26) est réalisée par une déformation tridimensionnelle et/ou par enlèvement local de matériau de l'au moins une couche intermédiaire (5) et/ou
- l'au moins un canal d'introduction de résine de matrice s'étend également à travers des trous dans les couches de fibres (4) correspondant aux trous dans les couches intermédiaires (5).

13. Procédé selon la revendication 11 ou 12, **caractérisé en ce que** l'au moins un canal d'introduction de résine de matrice est percé après le durcissement de la résine de matrice pour la formation d'un trou traversant (19).

14. Procédé selon la revendication 13, **caractérisé en ce que**, après la réalisation du trou traversant (19), un trou de raccordement (23) s'étendant le long de la surface principale (3) jusqu'au trou traversant (19) est réalisé dans la pièce composite à fibres (1).

15. Procédé selon la revendication 14, **caractérisé en ce que**
- de manière superposée avec le trou de raccordement (23) réalisé plus tard, un espace libre est laissé dans l'empilement grâce à des évidements dans les couches de fibres (4), afin de réaliser une bifurcation de l'au moins un canal d'introduction de résine de matrice,
- dans lequel, en option, le trou de raccordement (23) n'est pas réalisé dans les couches intermédiaires (5).
